# FASCICULE DE BREVET EUROPEEN

(11) **EP 0 546 935 B1**
(45) Date de publication et mention de la délivrance du brevet: **26.07.1995**
(21) Numéro de dépôt: 92403337.6
(22) Date de dépôt: 09.12.1992
(51) Int. Cl.: F01D 17/16

(54) **Stator dirigeant l'entrée de l'air à l'intérieur d'une turbomachine et procédé de montage d'une aube de ce stator**
Stator zur Einführung von Luft in das Innere einer Turbomaschine und Verfahren zum Montieren einer Schaufel dieses Stators
Stator guiding the inlet of air into a turbomachine and procedure for mounting a blade of this stator

(30) Priorité: 11.12.1991 FR 9115334
(43) Date de publication de la demande: 16.06.1993
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Naudet, Jacky Serge, F-91070 Bondoufle (FR)
(74) Mandataire: Berrou, Paul

(56) Documents cités:
- EP-A- 0 259 221
- US-A- 4 498 790

## Description

La présente invention concerne un stator dirigeant l'entrée de l'air à l'intérieur d'une turbomachine ou d'un compresseur tel que celui d'un turboréacteur d'avion. L'invention concerne également le procédé de montage d'une aube de ce stator.

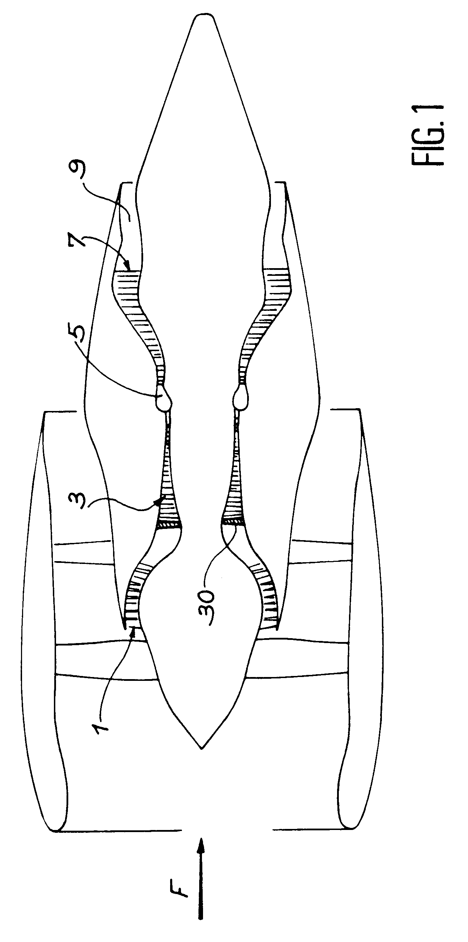

La structure générale d'un turboréacteur va maintenant être rapidement rappelée en faisant référence à la figure 1. Le turboréacteur est traversé par un courant d'air axial (symbolisé par la flèche F). Il comprend successivement une soufflante ou compresseur basse pression 1, un compresseur haute pression 3, une chambre de combustion 5, une turbine 7 et une tuyère d'éjection d'air 9. L'air aspiré par le turboréacteur traverse successivement les compresseurs basse pression 1 et haute pression 3 où il est comprimé, la chambre de combustion 5 où il est réchauffé et les tuyères 9 où il est éjecté.

La recherche toujours plus grande de gain de poids a conduit les motoristes à étudier et à réaliser des compresseurs munis d'aubes creuses ou réalisées en matériau composite. L'utilisation de ces techniques conduit malheureusement à la fabrication d'aubes plus fragiles que celles qui existaient auparavant.

Par ailleurs, l'augmentation du diamètre des soufflantes est un facteur déterminant dans les risques d'aspiration au sol ou durant le vol, de corps étrangers. Ces corps étrangers sont, par exemple, des oiseaux qui sont présents en grand nombre lorsque les avions volent à grande vitesse et à basse altitude. A haute altitude, il peut également s'agir de morceaux de glace.

Lorsque ces corps étrangers pénètrent à l'intérieur de la soufflante ou compresseur basse pression 1, ils entraînent généralement un léger déplacement dans la direction axiale des aubes du stator ou des aubes du rotor, voire même la rupture de ces aubes puisque celles-ci sont assez fragiles. Lorsqu'une aube d'un étage se déplace, elle vient buter contre les aubes de l'étage suivant et se rompt. Les fragments d'aubes pénètrant à leur tour dans le compresseur haute pression 3 entraînent des dommages secondaires aux aubes du stator et du rotor de celui-ci.

Il est donc important d'éviter que les aubes ne se déplacent axialement vers l'avant ou vers l'arrière du turboréacteur, sous l'action d'un choc avec un corps étranger.

Une première solution pour tenter de résoudre les problèmes causés aux aubes par l'ingestion de corps étrangers, est donnée dans la demande de brevet FR-2 326 603. L'aube décrite dans ce document est destinée à être placée dans un canal de soufflante à flux d'air et à être disposée en série avec une aube adjacente contre laquelle elle est susceptible de venir buter en cas de choc. De façon classique, ces aubes sont orientées radialement à l'intérieur du canal de soufflante. Chaque aube est constituée dans ce cas, d'une partie principale métallique munie à ses deux extrémités de pivots permettant une rotation sélective de l'aube autour de l'axe défini entre les deux pivots. Cette aube présente dans sa partie radiale extérieure aval, un coin constitué d'un matériau composite. Ce coin est généralement réalisé en un matériau composite graphite-époxy et forme le bord de fuite de l'aube. Il est fixé de façon rigide au reste de l'aube par un adhésif, par exemple. Ce coin est capable de se briser et de se séparer de la partie métallique soit lorsqu'il reçoit directement un choc, soit lorsque l'aube se déplace et que le coin vient buter contre l'aube suivante. Ainsi, lors d'un choc, seul le coin en matériau composite plus fragile, se fractionne en petits morceaux et lorsque ceux-ci sont aspirés par le compresseur, ils n'entraînent pas de dommages secondaires en aval.

Cette technique, si elle permet de limiter partiellement les dommages causés aux aubes des étages secondaires du compresseur, n'empêche pas le déplacement axial de cette aube.

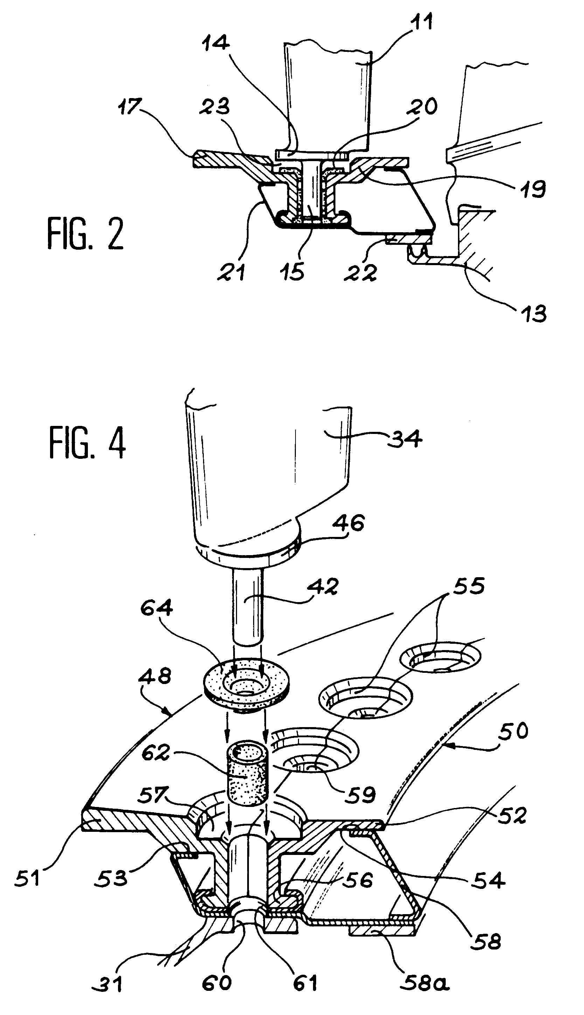

Les aubes de l'art antérieur sont généralement fixées comme cela est représenté en figure 2.

L'aube 11 est fixée à ses deux extrémités entre un carter extérieur de stator cylindrique (non représenté sur la figure 2) et une virole intérieure annulaire 13 disposée coaxialement à l'intérieur du carter extérieur. Chaque aube 11 présente à son extrémité radiale intérieure une plateforme 14 terminée par un pivot 15. Ce pivot 15 est maintenu entre deux demi-couronnes annulaires 17, 19 fixées autour de la virole 13 du compresseur. Une rondelle antifriction 20 est placée entre le pivot 15 et les deux demi-couronnes 17, 19. En outre, ces deux demi-couronnes 17 et 19 sont maintenues assemblées par un ensemble de tôles brasées 21 qui comporte un joint d'étanchéité 22. Comme on peut le constater sur cette figure 2, l'aube 11 n'est pas verrouillée à sa base (vers le centre du moteur), et la plateforme 14 repose simplement dans un logement 23 prévu dans les demi-couronnes 17, 19. Ceci explique le déplacement axial facile de l'aube lors de l'ingestion d'un corps étranger.

En conséquence, l'invention a pour but de remédier aux inconvénients précédemment cités et concerne un stator dirigeant l'entrée de l'air à l'intérieur d'une turbomachine. De préférence, dans l'invention, ce stator est situé à l'entrée du compresseur haute pression 3 et porte la référence 30 comme cela est illustré en figure 1. Toutefois, il est bien évident qu'un stator constitué de cette façon pourrait être placé à l'avant de la soufflante 1 ou même de façon plus générale dans tous autres types de turbine à gaz ou à transmission hydraulique.

L'invention concerne un stator dirigeant l'entrée de l'air à l'intérieur d'une turbomachine, ce stator comprenant une série d'aubes maintenues radialement à l'intérieur d'un canal d'admission d'air entre une virole intérieure et un carter radialement extérieur formant une partie des parois respectivement intérieure et extérieure dudit canal, chaque aube étant pourvue d'un pivot intérieur et d'un pivot extérieur respectivement solidaires de ses extrémités intérieure et extérieure, ces deux pivots définissant l'axe radial de l'aube et le carter extérieur étant muni d'au moins un alésage destiné à recevoir le pivot extérieur.

Selon les caractéristiques de l'invention, la virole intérieure comprend au moins un perçage destiné à recevoir l'un desdits pivots intérieurs et à permettre l'encastrement de celui-ci, le carter extérieur comprend des moyens de positionnement radial et de verrouillage d'au moins une aube, ces moyens permettant de maintenir l'extrémité libre du pivot intérieur de ladite aube dans ledit perçage lorsque l'aube est montée dans le stator et la distance entre l'extrémité radialement extérieure de l'aube et l'extrémité libre du pivot intérieur est inférieure à la distance entre les deux faces de la virole intérieure et du carter extérieur dirigées vers l'intérieur du canal d'amission d'air, de façon à permettre le montage de l'aube dans le stator.

Ces moyens de positionnement radial et de verrouillage de l'aube combinés au perçage de la virole intérieure permettent d'une part d'assurer le double encastrement de l'aube à ses deux extrémités et d'autre part de faciliter le montage des aubes.

De façon avantageuse, les moyens de positionnement radial et de verrouillage de l'aube comprennent une douille filetée sur sa surface externe et disposée autour du pivot extérieur, l'alésage du carter extérieur étant taraudé afin de pouvoir coopérer avec cette douille. Une bague anti-friction est prévue entre ladite douille et le pivot extérieur. L'extrémité radialement intérieure de la douille repose sur l'extrémité extérieure de l'aube de façon à empêcher le déplacement radial de l'aube, une fois celle-ci fixée dans le stator.

Ces moyens de positionnement radial et de verrouillage de l'aube sont donc faciles à fabriquer et à installer et n'entraînent pas de surcoûts importants.

Selon une variante préférée de réalisation de l'invention, le carter extérieur présente un logement destiné à recevoir l'extrémité extérieure de l'aube et l'alésage destiné à recevoir le pivot extérieur débouche à l'intérieur de ce logement. De plus, les moyens de positionnement et de verrouillage comprennent une rondelle disposée autour du pivot extérieur de l'aube entre le fond dudit logement et l'extrémité extérieure de l'aube ; l'extrémité radialement intérieure de la douille reposant contre au moins une partie de cette rondelle.

Enfin, selon d'autres caractéristiques de l'invention, le pivot intérieur de l'aube est maintenu entre deux demi-couronnes disposées autour de la virole intérieure, chaque demi-couronne présentant au moins un logement destiné à recevoir une partie de l'extrémité intérieure de l'aube, ces deux demi-couronnes étant maintenues l'une en face de l'autre par au moins un support percé d'un orifice faisant face au perçage de la virole intérieure et permettant le passage du pivot intérieur.

Le mode de fixation classique de la partie radialement intérieure de l'aube ayant été modifié afin de permettre son encastrement, il était donc nécessaire de réaliser un orifice dans le support afin de permettre le passage du pivot intérieur à travers celui-ci, jusque dans le perçage de la virole intérieure.

Enfin, dans le cas où l'on souhaite faire varier l'angle d'incidence de l'aube par rapport au courant de fluide traversant la turbomachine, l'extrémité libre du pivot extérieur est reliée à des moyens permettant de faire pivoter l'aube autour de son axe radial.

L'invention concerne également un procédé de montage d'une aube du stator précédemment décrit, ce montage visant à assurer le double encastrement de l'aube à l'intérieur du stator. Ce procédé de montage comprend les étapes consistant à :
- introduire le pivot extérieur de l'aube dans l'alésage du carter extérieur depuis l'intérieur du canal d'admission d'air, de façon à réaliser le premier encastrement de l'aube,
- faire pivoter cette aube autour de son axe radial de façon à pouvoir enfoncer complètement le pivot extérieur dans ledit alésage,
- introduire depuis l'extérieur du carter extérieur, les moyens de positionnement radial et de verrouillage de l'aube,
- installer la virole intérieure par déplacement axial à l'intérieur de la turbomachine,
- faire pivoter l'aube jusqu'à amener son bord d'attaque vers l'entrée du canal d'admission d'air,
- déplacer radialement l'aube jusqu'à amener l'extrémité du pivot intérieur dans le perçage de la virole intérieure afin de réaliser le second encastrement de l'aube,
- déplacer les moyens de positionnement radial et de verrouillage jusqu'à ce que ceux-ci bloquent l'aube et empêchent le pivot intérieur de sortir du perçage de la virole intérieure.

Plus précisément, ce procédé consiste à :
- disposer une rondelle autour du pivot extérieur de l'aube,
- introduire ledit pivot extérieur dans l'alésage du carter extérieur depuis l'intérieur du canal d'admission d'air, de façon à réaliser le premier encastrement de l'aube,
- faire pivoter l'aube autour de son axe radial de façon à pouvoir enfoncer complètement l'aube et à ce que la rondelle vienne au contact du fond du logement du carter extérieur,
- introduire une bague anti-friction à l'intérieur de la douille,
- visser la douille dans l'alésage du carter extérieur depuis l'extérieur du canal d'admission d'air jusqu'à ce que son extrémité radialement intérieure vienne au contact de la rondelle,
- installer les deux demi-couronnes de part et d'autre du pivot intérieur,
- installer le support de ces deux demi-couronnes,
- introduire la virole intérieure axialement,
- faire pivoter l'aube jusqu'à ramener le bord d'attaque en direction de l'entrée du canal d'admission d'air,
- déplacer l'aube et la rondelle radialement vers l'intérieur jusqu'à ce que l'extrémité du pivot intérieur traverse le support et pénètre dans le perçage de la virole intérieure en réalisant ainsi le second encastrement de l'aube,
- visser la douille jusqu'à ce que son extrémité radialement interne touche la rondelle et bloque l'aube radialement.

L'invention sera mieux comprise à la lecture de la description suivante d'un mode préférentiel de réalisation donné à titre d'exemple illustratif et non limitatif, cette description étant faite en faisant référence aux dessins joints dans lesquels :
- la figure 1 est un schéma représentant une vue d'ensemble d'une turbomachine,
- la figure 2 est une vue représentant un mode de fixation classique des aubes d'un stator selon l'art antérieur,
- la figure 3 est une vue en coupe partielle d'une aube du stator selon l'invention, dans la première partie du procédé de montage,
- la figure 4 est une vue en perspective éclatée de la partie intérieure de l'aube et de la virole intérieure,
- la figure 5 est une vue en coupe partielle et tronquée de l'aube lorsque son montage à l'intérieur de la virole intérieure et du carter extérieur est terminé.

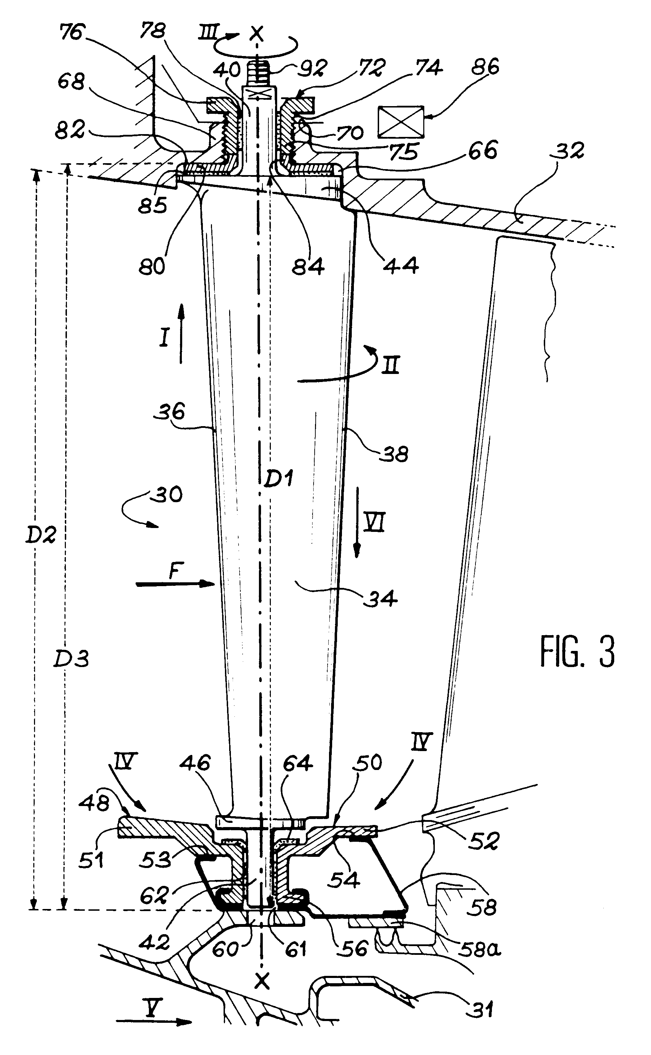

Comme illustré en figure 3, l'air pénètre à l'intérieur du stator selon une direction axiale représentée par la flèche F afin d'être amené à l'intérieur d'une turbomachine, par exemple à l'intérieur du compresseur haute pression d'un turboréacteur. Un canal d'admission d'air est défini par deux parois, constituées au moins partiellement par une virole intérieure 31 et par un carter radialement extérieur 32. Le carter extérieur 32 est annulaire et entoure la virole 31. Les aubes 34 du stator (une seule est représentée en figure 3), dirigent le flux d'air à l'intérieur du canal d'admission. Ces aubes sont disposées radialement par rapport à la direction axiale F. Dans toute la suite de la description le terme intérieur se rapportera aux éléments ou aux parties d'éléments dirigés radialement vers l'intérieur du stator et inversement pour le terme extérieur. Chaque aube 34 présente un bord d'attaque 36 dirigé vers l'entrée d'air et un bord de fuite 38 opposé. Chaque aube 34 est pourvue à son extrémité extérieure d'un pivot extérieur 40 et à son extémité intérieure d'un pivot intérieur 42. Ces deux pivots définissent l'axe radial X-X de l'aube. Dans le cas particulier de l'aube représentée en figure 3, et comme cela est souvent le cas, l'aube 34 comprend en outre une plateforme extérieure 44 et une plateforme intérieure 46. Dans la suite de la description, ces plateformes 44 ou 46 seront parfois nommées par le terme plus général d'extrémité. Il faut en effet noter que toutes les aubes ne possèdent pas de plateforme.

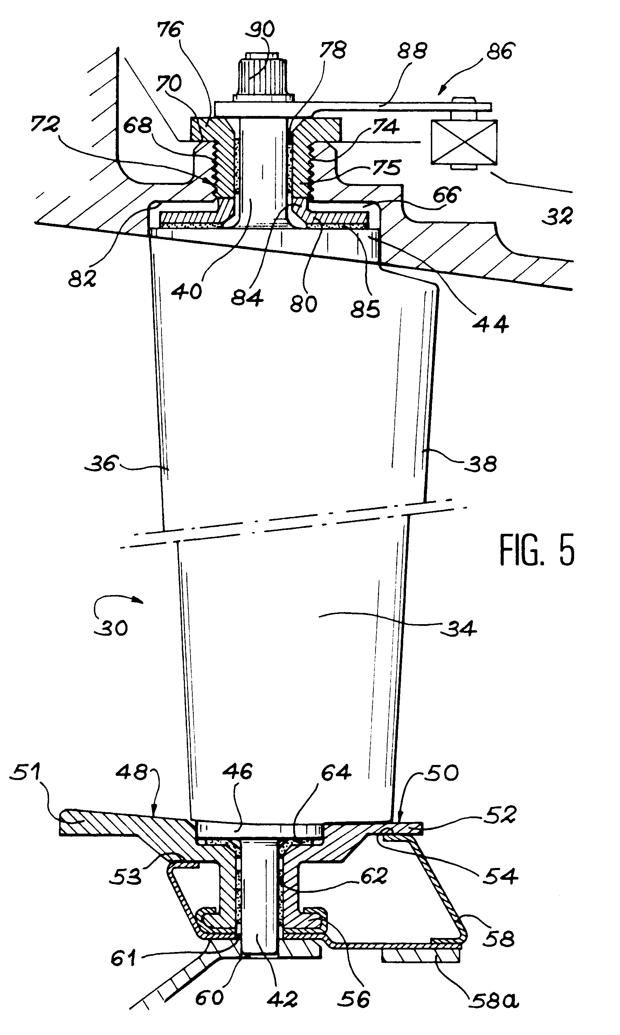

De façon classique et comme illustré aux figures 3 et 4, le pivot intérieur 42 de l'aube est maintenu entre deux demi-couronnes 48 et 50, ces deux demi-couronnes étant annulaires et entourent complètement la virole intérieure 31. Ces deux demi-couronnes 48 et 50 sont en fait constituées par des profilés symétriques et complémentaires. Chaque profilé 48, 50 présente un rebord 51, (respectivement 52) définissant deux zones intérieures d'appui 53 et 54. Chaque demi-couronne 48, 50 présente en outre dans sa partie radialement intérieure un rebord formant saillie 56. De plus, chaque demi-couronne 48, 50 présente dans sa partie centrale, une série de demi-lamages ou logement 55 et lorsque les deux demi-couronnes 48, 50 sont assemblées, ces demi-lamages 55 définissent un épaulement annulaire 57 (voir figure 4). Ces deux demi-couronnes sont maintenues en place par un ensemble support 58 constitué de tôles brasées. Celui-ci maintient simultanément les deux rebords 56, prend appui sur les zones de contact 53 et 54 et sur la virole intérieure 31 et porte un joint d'étanchéité 58a. Chaque demi-couronne 48, 50 présente en outre, plusieurs gorges radiales verticales qui une fois les deux demi-couronnes 48 et 50 assemblées forment des orifices 59 destinés à recevoir les pivots 42. La forme et la fixation des deux demi-couronnes 48 et 50 et du support 58 étant extrêmement classiques, elles ne seront pas décrites plus en détail.

Selon les caractéristiques de l'invention et comme illustré aux figures 3 et 5, la virole intérieure 31 présente un perçage 60 permettant, contairement à ce qui existait dans l'art antérieur, d'encastrer le pivot intérieur 42 de l'aube. Le support 58 présente également un orifice 61. Lorsque l'aube est montée, comme cela est représenté en figure 5 le pivot intérieur 42 pénètre à l'intérieur de ce perçage 60. En outre, une bague antifriction 62 et une rondelle antifriction 64 sont disposées respectivement entre les deux demi-couronnes 48 et 50 et le pivot intérieur 42 et entre ces mêmes demi-couronnes et la plateforme intérieure 46 de l'aube 34. L'ensemble bague antifriction 62 et rondelle antifriction 64 peut également être monobloc.

Par ailleurs, et comme illustré en figures 3 et 5, le carter extérieur 32 est muni d'un logement 66 destiné à recevoir la plateforme 44 de l'aube, ce logement 66 se prolongeant vers l'extérieur par un alésage taraudé 68 destiné à recevoir le pivot extérieur 40. Cet alésage taraudé 68 présente un rebord extérieur 70. Une douille 72 filetée sur sa surface externe (référencée 74) est disposée autour du pivot 40 et partiellement à l'intérieur de l'alésage 68. Cette douille présente dans sa partie radialement intérieure une extrémité 75 et dans sa partie radialement extérieure un rebord 76 s'étendant radialement (par rapport à l'axe longitudinal de la douille). Une bague antifriction 78 est disposée entre cette douille et le pivot externe 40. Cette douille ainsi qu'une rondelle 80 constituent des moyens de positionnement radial et de verrouillage de l'aube. Cette rondelle 80 est disposée entre le fond 82 du logement 66 et la surface extérieure de la plateforme 44. De préférence, selon l'invention, cette rondelle 80 présente dans sa partie centrale un rebord 84 formant saillie annulaire. De préférence, on prévoit entre la rondelle 80 et la plateforme 44, un anneau antifriction 85. L'extrémité radialement intérieure 75 de la douille 72 repose sur la rondelle 80 ou plus précisément son rebord 84. Toutefois, dans une autre variante de réalisation, on pourrait supprimer cette rondelle 80 et l'anneau 85 et il faudrait alors que l'extrémité 75 de la douille repose directement sur l'extrémité extérieure 44 de l'aube pour que cette dernière soit bloquée.

Enfin comme cela est illustré en figure 5, les aubes peuvent pivoter autour de leur axe radial X-X par des moyens désignés sous la référence générale 86. Comme illustré en figure 5, ces moyens comprennent de façon classique une biellette 88 maintenue à l'extémité du pivot extérieur 40 au moyen d'un boulon 90 coopérant avec l'extrémité filetée 92 (voir figure 3) du pivot extérieur 40.

Les étapes successives du montage vont maintenant être décrites plus précisément en faisant référence notamment à la figure 3.

On dispose tout d'abord autour du pivot extérieur 40 de l'aube, l'anneau antifriction 85 et la rondelle 80. Ensuite, on introduit l'ensemble dans le carter extérieur 32 par l'intérieur du canal d'admission d'air, jusqu'à ce que le pivot extérieur 40 pénètre dans l'alésage 68 (opération représentée par la flèche I). Ceci permet de réaliser le premier encastrement de l'aube. Ensuite, on fait pivoter légèrement l'aube 34 autour de son axe radial X-X de façon à la déplacer depuis la position représentée en figure 5 jusqu'à la position représentée en figure 3 où la partie supérieure de son bord de fuite 38 ne vient plus buter sur le carter extérieur 32 (opération représentée par la flèche II). Ceci permet d'enfoncer complètement l'aube 34 jusqu'à ce que la rondelle 80 vienne en butée contre le fond 82 du logement 66.

Ensuite, on dispose la bague antifriction 78 à l'intérieur de la douille 72 et l'on introduit celle-ci autour du pivot 40 depuis l'extérieur du carter 32. On visse cette douille 72 à l'intérieur de l'alésage taraudé 68 jusqu'à ce que son extrémité radialement intérieure 75 vienne au contact de la saillie 84 de la rondelle 80 (opération représentée par la flèche III).

Lorsque cette aube 34 et éventuellement les autres aubes du stator sont ainsi disposées, on place de part et d'autre du pivot intérieur 42, les deux demi-couronnes 48 et 50, après avoir pris soin de disposer la bague antifriction 62 et la rondelle antifriction 64. On place ensuite le support 58 (opération représentée par les flèches IV).

On introduit alors en direction axiale la virole intérieure 31 jusqu'à ce que l'alésage 60 soit en vis-à-vis du pivot intérieur 42 et de l'orifice 61 (opération représentée par la flèche V). Comme illustré en figure 3, cette opération est possible dans la mesure où la distance D₁ entre l'extrémité radialement extérieure 44 de l'aube et l'extrémité libre du pivot intérieur 42 est inférieure à la distance D₂ entre les deux faces de la virole intérieure 31 et du carter extérieur 32 dirigées vers l'intérieur du canal d'admission d'air ou à la distance D₃ entre la virole intérieure 31 et le fond 82 du logement 66 lorsque celui-ci existe.

Ensuite, on déplace radialement l'aube 34 (flèche VI) vers l'intérieur de façon à amener le pivot 42 dans le perçage 60 et à ce que la plateforme 46 repose sur la rondelle antifriction 64 au fond du logement. On réalise alors le second encastrement de l'aube. On parachève cette opération en faisant effectuer à l'aube un mouvement de rotation inverse à celui de la flèche II jusqu'à ramener son bord d'attaque 36 en direction de l'ouverture du canal d'admission d'air comme cela est représenté en figure 5.

Enfin, on visse complètement la douille 72 jusqu'à ce que l'extrémité radialement intérieure 75 de celle-ci touche de nouveau la rondelle 80 (plus précisément la saillie 84). Ceci permet d'empêcher tout déplacement radial ultérieur de l'aube 34. Il est important que le rebord 76 de la douille 72 ne vienne pas buter contre le rebord extérieur 70 de l'alésage 68 avant que l'extrémité 75 de la douille ne touche la saillie 84. Les dimensions de ces différents éléments seront donc calculées en fonction de ces impératifs.

## Revendications

1. Stator dirigeant l'entrée de l'air à l'intérieur d'une turbomachine, ce stator comprenant une série d'aubes (34) maintenues radialement à l'intérieur d'un canal d'admission d'air entre une virole intérieure (31) et un carter radialement extérieur (32) formant une partie des parois respectivement intérieure et extérieure dudit canal, chaque aube (34) étant pourvue d'un pivot intérieur (42) et d'un pivot extérieur (40) respectivement solidaires de ses extrémités intérieure (46) et extérieure (44), ces deux pivots (40, 42) définissant l'axe radial (X-X) de l'aube (34), le carter extérieur (32) étant muni d'au moins un alésage (68) destiné à recevoir le pivot extérieur (40), caractérisé en ce que la virole intérieure (31) comprend au moins un perçage (60) destiné à recevoir l'un desdits pivots intérieurs (42) et à permettre l'encastrement de celui-ci, en ce que le carter extérieur (32) comprend des moyens de positionnement radial et de verrouillage (72, 80) d'au moins une aube (34), ces moyens (72, 80) permettant de maintenir l'extrémité libre du pivot intérieur (42) de ladite aube dans ledit perçage (60), lorsque l'aube (34) est montée dans le stator et en ce que la distance (D₁) entre l'extrémité radialement extérieure (44) de l'aube et l'extrémité libre du pivot intérieur (42) est inférieure à la distance (D₂) entre les deux faces de la virole intérieure (31) et du carter extérieur (32) dirigées vers l'intérieur du canal d'admission d'air, de façon à permettre le montage de l'aube (34) dans le stator.

2. Stator selon la revendication 1, caractérisé en ce que les moyens de positionnement radial et de verrouillage de l'aube comprennent une douille (72) filetée sur sa surface externe (74) et disposée autour du pivot extérieur (40), l'alésage (68) du carter extérieur (32) étant taraudé afin de pouvoir coopérer avec cette douille, en ce qu'une bague antifriction (78) est prévue entre ladite douille (72) et le pivot extérieur (40) et en ce que l'extrémité radialement intérieure (75) de la douille (72) repose sur l'extrémité extérieure (44) de l'aube, de façon à empêcher le déplacement radial de l'aube (34), une fois celle-ci fixée dans le stator.

3. Stator selon la revendication 1, caractérisé en ce que le carter extérieur (32) présente un logement (66) destiné à recevoir l'extrémité extérieure (44) de l'aube (34), l'alésage (68) destiné à recevoir le pivot extérieur (40) débouchant à l'intérieur de ce logement (66) et en ce que la distance (D₁) entre l'extrémité extérieure (44) de l'aube et l'extrémité libre du pivot intérieur (42) est inférieure à la distance (D₃) entre le fond (82) de ce logement (66) et la face de la virole intérieure (31) dirigée vers l'intérieur du canal d'admission d'air.

4. Stator selon les revendications 2 et 3, caractérisé en ce que les moyens de positionnement et de verrouillage comprennent également une rondelle (80) disposée autour du pivot extérieur (40) de l'aube (34) entre le fond (82) du logement (66) et l'extrémité extérieure (44) de l'aube et en ce que l'extrémité radialement intérieure (75) de la douille repose contre au moins une partie de cette rondelle (80).

5. Stator selon la revendication 4, caractérisé en ce que la rondelle (80) présente dans sa partie centrale une saillie annulaire (84) coopérant avec l'extrémité radialement intérieure (75) de la douille (72).

6. Stator selon l'une quelconque des revendications précédentes, caractérisé en ce que le pivot intérieur (42) de l'aube (34) est maintenu entre deux demi-couronnes (48, 50) disposées autour de la virole intérieure (31), chaque demi-couronne (48, 50) présentant au moins un logement (55) destiné à recevoir une partie de l'extrémité intérieure (46) de l'aube, ces deux demi-couronnes (48, 50) étant maintenues l'une en face de l'autre par au moins un support (58) percé d'un orifice (61) faisant face au perçage (60) de la virole intérieure (31) et permettant le passage du pivot intérieur (42).

7. Stator selon la revendication 4, caractérisé en ce qu'un anneau antifriction (85) est prévu entre l'extrémité extérieure (44) de l'aube et la rondelle (80).

8. Stator selon l'une quelconque des revendications précédentes, caractérisé en ce que l'extrémité libre du pivot extérieur (40) est reliée à des moyens (86) permettant de faire pivoter l'aube autour de son axe radial (X-X).

9. Procédé de montage d'une aube du stator selon l'une des revendications 1 à 8, destiné à assurer le double encastrement de ladite aube, caractérisé en ce qu'il comprend les étapes consistant à :
- introduire le pivot extérieur (40) de l'aube (34) dans l'alésage (68) du carter extérieur (32) depuis l'intérieur du canal d'admission d'air, de façon à réaliser le premier encastrement de l'aube,
- faire pivoter cette aube (34) autour de son axe radial (X-X) de façon à pouvoir enfoncer complètement le pivot extérieur (40) dans ledit alésage (68),
- introduire depuis l'extérieur du carter extérieur (32), les moyens de positionnement radial et de verrouillage (72, 80) de l'aube,
- installer la virole intérieure (31) par déplacement axial à l'intérieur de la turbomachine,
- faire pivoter l'aube (34) jusqu'à amener son bord d'attaque (36) vers l'entrée du canal d'admission d'air,
- déplacer radialement l'aube (34) jusqu'à amener l'extrémité du pivot intérieur (42) dans le perçage (60) de la virole intérieure (31) afin de réaliser le second encastrement,
- déplacer les moyens de positionnement radial et de verrouillage (72, 80) jusqu'à ce que ceux-ci bloquent l'aube (34) radialement et empêchent le pivot intérieur (42) de sortir du perçage (60) de la virole intérieure.

10. Procédé de montage selon la revendication 9 d'une aube d'un stator selon les revendications 2, 3, 4 et 6, caractérisé en ce qu'il comprend les étapes consistant à :
- disposer une rondelle (80) autour du pivot extérieur (40) de l'aube (34),
- introduire ledit pivot extérieur (40) dans l'alésage (68) du carter extérieur (32) depuis l'intérieur du canal d'admission d'air, de façon à réaliser le premier encastrement de l'aube,
- faire pivoter l'aube (34) autour de son axe radial (X-X) de façon à pouvoir enfoncer complètement l'aube et à ce que la rondelle (80) vienne au contact du fond (82) du logement (66) du carter extérieur,
- introduire une bague antifriction (78) à l'intérieur de la douille (72),
- visser la douille (72) dans l'alésage (68) du carter extérieur depuis l'extérieur du canal d'admission d'air, jusqu'à ce que son extrémité radialement intérieure (75) vienne au contact de la rondelle (80),
- installer les deux demi-couronnes (48, 50) de part et d'autre du pivot intérieur (42),
- installer le support (58) de ces deux demi-couronnes,
- introduire la virole intérieure (31) axialement,
- faire pivoter l'aube (34) jusqu'à ramener le bord d'attaque (36) en direction de l'entrée du canal d'admission d'air,
- déplacer l'aube (34) et la rondelle (80) radialement vers l'intérieur jusqu'à ce que l'extrémité du pivot intérieur (42) traverse le support (58) et pénètre dans le perçage (60) de la virole intérieure (31) en réalisant ainsi le second encastrement de l'aube,
- visser la douille (72) jusqu'à ce que son extrémité radialement interne (75) touche la rondelle (80) et bloque l'aube (34) radialement.

11. Procédé de montage selon les revendications 7 et 10, caractérisé en ce qu'il consiste à disposer un anneau antifriction (85) entre l'extrémité extérieure de l'aube (44) et la rondelle (80) avant d'introduire le pivot extérieur (40) dans l'alésage (68) du carter extérieur (32).

## Claims

1. A stator guiding intaken air to the interior of a turbomachine, the stator comprising a number of vanes (34) retained radially in an air intake duct between an inner annular member (31) and a radially outer casing (32) forming a part of the inner and outer walls respectively of the duct, each vane (34) having an inner pivot pin (42) and an outer pivot pin (40) rigidly secured to the inner end (46) and outer end (44) respectively of the vane, the two pivot pins (40, 42) defining the radial axis (X-X) of the vane (34), the outer casing (32) being formed with at least one bore (68) adapted to receive the outer pivot pin (40), characterised in that the inner annular member 31) is formed with at least one bore (60) adapted to receive one of the inner pivot pins (42) for the fixing thereof , the outer casing (32) comprises means (72, 80) for radially locating and locking at least one vane (34), the latter means (72, 80) enabling the free end of the inner pivot pin (42) of the vane to be retained in the bore (60) when the vane (34) is assembled in the stator, and to enable the vane (34) to be assembled in the stator the distance (D₁) between the radially outer end (44) of the vane and the free end of the inner pivot pin (42) is less than the distance (D₂) between those two surfaces of the inner annular member (31) and outer casing (32) which face into the air intake duct,

2. A stator according to claim 1, characterised in that the means for radially locating and locking the vane comprise a socket (72) having a screwthreaded outer surface (74) and disposed around the outer pivot pin (40), the bore (68) in the outer casing (32) being tapped for co-operation with the socket, an anti-friction ring (78) is disposed between the socket (72) and the outer pivot pin (40) and the radially inner end (75) of the socket (72) bears on the outer end (44) of the vane so as to prevent radial movement thereof after the vane has been fixed in the stator.

3. A stator according to claim 1, characterised in that the outer casing (32) is formed with a recess (66) adapted to receive the outer end (44) of the vane (34), the bore (68) which is adapted to receive the outer pivot pin (40) extending into the interior of the latter recess (66), and the distance (D₁) between the outer end (44) of the vane and the free end of the inner pivot pin (42) is less than the distance (D₃) between the base (82) of the recess (66) and that surface of the inner annular member (31) which faces into the air intake duct.

4. A stator according to claims 2 and 3, characterised in that the locating and locking means also comprise a washer (80) disposed around the outer pivot pin (40) of the vane (34) between the base (82) of the recess (66) and the outer end (44) of the vane and the radially inner end (75) of the socket bears on at least a part of the washer (80).

5. A stator according to claim 4, characterised in that the washer (80) has in its central part an annular projection (84) which co-operates with the radially inner end (75) of the socket (72).

6. A stator according to any of the previous claims, characterised in that the inner pivot pin (42) of the vane (34) is retained between two half-crowns (48, 50) disposed around the inner annular member (31), each half-crown (48, 50) being formed with at least one recess (55) adapted to receive a part of the inner end (46) of the vane, the two half-crowns (48, 50) being retained opposite one another by at least one support (58) pierced with an orifice (61) opposite the bore (60) in the inner annular member (31) and adapted for the passage of the inner pivot pin (42).

7. A stator according to claim 4, characterised in that an anti-friction ring (85) is provided between the outer end (44) of the vane and the washer (80).

8. A stator according to any of the previous claims, characterised in that the free end of the outer pivot pin (40) is connected to means (86) for pivoting the vane around its radial axis (X-X).

9. A process for assembling a stator vane according to any of claims 1 to 8 so that it is doubly fixed, characterised in that it comprises the following steps:
introducing the outer pivot pin (40) of the vane (34) into the bore (68) of the outer casing (32) from inside the air intake duct for the first fixing of the vane;
pivoting the vane (34) around its radial axis (X-X) so that the outer pivot pin (40) can be fully engaged in the bore (68);
introducing from outside the outer casing (32) the means (72, 80) for radially locating and locking the vane;
installing the inner annular member (31) by axial displacement inside the turbomachine;
pivoting the vane (34) until its leading edge faces towards the entry of the air intake duct;
moving the vane (34) radially until the end of its inner pivot pin (42) engages in the bore (60) in the inner annular member (31) for the second fixing, and
moving the radial locating and locking means (72, 80) until they lock the vane (34) radially and prevent the inner pivot pin (42) from disengaging from the bore (60) in the inner annular member (31).

10. A process according to claim 9 for assembling a stator vane according to claims 2, 3, 4 and 6, characterised in that it comprises the following steps:
placing a washer (80) around the outer pivot pin (40) of the vane (34);
introducing the outer pivot pin (40) into the bore (68) in the outer casing (32) from inside the air intake duct for the first fixing of the vane;
pivoting the vane (34) around its radial axis (X-X) so that the vane can be fully engaged and the washer (80) contacts the base (82) of the recess (66) in the outer casing;
introducing an anti-friction ring (78) inside the socket (72);
screwing the socket (72) into the bore (68) in the outer casing from outside the air intake duct until its radially inner end (75) contacts the washer (80);
installing the two half-crowns (48, 50) on either side of the inner pivot pin (42);
installing the support (58) for the two half-crowns;
pivoting the vane (34) until its leading edge (36) faces into the air intake duct entry;
moving the vane (34) and washer (80) radially inwards until the end of the inner pivot pin (42) extends through the support (58) and into the bore (60) in the inner annular member (31) for the second fixing of the vane, and
screwing in the socket (72) until its radially inner end (75) contacts the washer (80) and locks the vane (34) radially.

11. A process according to claims 7 (sic!) and 10, characterised in that it consists of disposing an antifriction ring (85) between the outer end (44) of the vane (sic!) and the washer (80) before the introduction of the outer pivot pin (40) into the bore (68) in the outer casing (32).

## Patentansprüche

1. Stator zur Führung des Lufteintritts in das Innere einer Turbomaschine, wobei dieser Stator mehrere Schaufeln (34) aufweist, die radial im Inneren eines Lufteinlaßkanals zwischen einem Innenrand (31) und einem radial äüßeren Gehäuse (32) gehalten sind, die einen Teil der inneren bzw. äußeren Wand des -als bilden, wobei jede Schaufel (34) mit einem inneren Drehzapfen (42) und einem äußeren Drehzapfen (40) versehen ist, die an ihrem inneren (46) bzw. äußeren (44) Ende fest angebracht sind, wobei die beiden Drehzapfen (40,42) eine Radialachse (X-X) der Schaufel (34) festlegen und das äußere Gehäuse (32) mit wenigstens einer Bohrung (68) zur Aufnahme des äußeren Drehzapfens (40) versehen ist,
dadurch **gekennzeichnet**,
daß der Innenrand (31) wenigstens eine Bohrung (60) aufweist zur Aufnahme von einem der inneren Drehzapfen (42) und zur Verankerung von diesem, daß das äußere Gehäuse (32) Mittel (72,80) zur radialen Positionierung und Verriegelung wenigstens einer Schaufel (34) aufweist, wobei diese Mittel (72,80) das Halten des freien Endes des inneren Drehzapfens (42) der Schaufel in der Bohrung (60) gestatten, wenn die Schaufel (34) in dem Stator angebracht ist und daß der Abstand (D₁) zwischen dem radial äußeren Ende (44) der Schaufel und dem freien Ende des inneren Drehzapfens (42) kleiner ist als der Abstand (D₂) zwischen den beiden Seiten des Innenrands (31) und des äußeren Gehäuses (32), die in Richtung des Inneren des Lufteinlaßkanals gerichtet sind, um somit die Montage der Schaufel (34) in den Stator zu gestatten.

2. Stator nach Anspruch 1,
dadurch **gekennzeichnet**,
daß die Mittel zur radialen Positionierung und der Verriegelung der Schaufel eine Gewindebuchse (42) auf ihrer Außenfläche (74) um den äußeren Drehzapfen (40) herum aufweisen, wobei die Bohrung (68) des äußeren Gehäuses (32) mit einem Gewinde versehen ist, um mit dieser Buchse zusammenwirken zu können, daß ein Gleitring (78) zwischen der Buchse (72) und dem äußeren Drehzapfen (40) vorgesehen ist, und daß sich das radial innere Ende (75) der Buchse (72) auf dem äußeren Ende (44) der Schaufel abstützt, um somit ein radiales Verschieben der Schaufel (34) zu verhindern, wenn diese in dem Stator befestigt ist.

3. Stator nach Anspruch 1,
dadurch **gekennzeichnet**,
daß das Außengehäuse (32) eine Aufnahme (66) zur Aufnahme des äußeren Endes (44) der Schaufel (34) aufweist, wobei die Bohrung (68) zur Aufnahme des äußeren Drehzapfens (40) in das Innere dieser Aufnahme (66) mündet, und daß der Abstand (D₁) zwischen dem äußeren Ende (44) der Schaufel und dem freien Ende des inneren Drehzapfens (42) kleiner ist als der Abstand (D₃) zwischen dem Boden (82) dieser Aufnahme (66) und der Seite des Innerenrands (31), die in Richtung des Inneren des Lufteinlaßkanals gerichtet ist.

4. Stator nach einem der Ansprüche 2 oder 3,
dadurch **gekennzeichnet**,
daß die Mittel zur Positionierung und Verriegelung ebenso eine Rundscheibe (80) aufweisen, die um den äußeren Drehzapfen (40) der Schaufel (34) zwischen dem Boden (82) der Aufnahme (66) und dem äußeren Ende (44) der Schaufel vorgesehen ist, und daß das radial innere Ende (75) der Buchse sich wenigstens auf einem Teil dieser runden Scheibe (80) abstützt.

5. Stator nach Anspruch 4,
dadurch **gekennzeichnet**,
daß die Rundscheibe (80) in ihrem Mittenabschnitt einen ringförmigen Vorsprung (84) aufweist, der mit dem radial inneren Ende (75) der Buchse (72) zusammenwirkt.

6. Stator nach einem der vorhergehenden Ansprüche,
dadurch **gekennzeichnet**,
daß der innere Drehzapfen (42) der Schaufel (34) zwischen zwei Halbkränzen (48,50) gehalten ist, die um den Innenrand (31) vorgesehen sind, wobei jeder Halbkranz (48,50) wenigstens eine Aufnahme (55) zur Aufnahme eines Teils des inneren Endes (46) der Schaufel aufweist, wobei diese beiden Halbkränze (48,50) einander gegenüberliegend durch wenigstens eine Halterung (58) gehalten sind, die mit einer Öffnung (61) durchbohrt sind, die der Bohrung (60) des Innenrandes (31) gegenüberliegt und den Durchgang des inneren Drehzapfens (42) gestattet.

7. Stator nach Anspruch 4,
dadurch **gekennzeichnet**,
daß ein Gleitring (85) zwischen dem äußeren Ende (44) der Schaufel und der Rundscheibe (80) vorgesehen ist.

8. Stator nach einem der vorhergehenden Ansprüche,
dadurch **gekennzeichnet**,
daß das freie Ende des äußeren Drehzapfens (40) mit Mitteln (86) verbunden ist, die ein Schwenken der Schaufel um ihre Radialachse (X-X) gestatten.

9. Verfahren zur Anbringung einer Schaufel des Stators nach einem der Ansprüche 1 bis 8 zur Gewährleistung der doppelten Verankerung der Schaufel,
dadurch **gekennzeichnet**,
daß es die folgenden Schritte aufweist:
- Einführen des äußeren Drehzapfens (40) der Schaufel (34) in die Bohrung (68) des äußeren Gehäuses (32) von dem Inneren des Lufteinlaßkanals her, um somit eine erste Verankerung der Schaufel auszuführen,
- Schwenken dieser Schaufel (34) um ihre Radialachse (X-X), um den äußeren Drehzapfen (40) vollständig in die Bohrung (68) einzubringen,
- Einführen der Mittel zur radialen Positionierung und Verriegelung (72,80) der Schaufel von außerhalb des äußeren Gehäuses (32) her,
- Anbringen des Innenrands (31) durch axiales Verschieben im Inneren der Turbomaschine,
- Schwenken der Schaufel (34), so daß ihre Eintrittskante (36) in Richtung des Eingangs des Lufteinlaßkanals weist,
- radiales Verschieben der Schaufel (34), bis das Ende des inneren Drehzapfens (42) in der Bohrung (60) des inneren Rings (31) ist, um die zweite Verankerung auszuführen und
- Verschieben der Mittel zur radialen Positionierung und Verriegelung (72,80), bis diese die Schaufel (34) radial blockieren und das Herausgehen des inneren Drehzapfens (42) aus der Bohrung (60) des inneren Rings verhindern.

10. Montageverfahren nach Anspruch 9 für eine Schaufel eines Stators gemäß den Ansprüchen 2, 3, 4 und 6,
dadurch **gekennzeichnet**,
daß es die folgenden Schritte aufweist:
- Anbringen einer Rundscheibe (80) um den äußeren Drehzapfen (40) der Schaufel (34),
- Einführen des äußeren Drehzapfens (40) in die Bohrung (68) des äußeren Gehäuses (32) von dem Inneren des Lufteinlaßkanals her, um somit eine erste Verankerung der Schaufel auszuführen,
- Schwenken der Schaufel (34) um ihre radiale Achse (X-X), um somit die Schaufel vollständig einzubringen und die Rundcheibe (80) in Berührung mit dem Boden (82) der Aufnahme (66) des äußeren Gehäuses zu bringen,
- Einsetzen eines Gleitrings (78) in das Innere der Buchse (72),
- Verschrauben der Buchse (72) in der Bohrung (68) des äußeren Gehäuses von außerhalb des Lufteinlaßkanals her, bis ihr radial inneres Ende (75) in Berührung mit der Rundscheibe (80) kommt,
- Anbringen der beiden Halbkränze (48,50) zu beiden Seiten des inneren Drehzapfens (42),
- Anbringen des Trägers (58) dieser beiden Halbkränze,
- Einsetzen des inneren Ringes (31) in axialer Richtung,
- Schwenken der Schaufel (34), bis die Eintrittskante (36) in Richtung des Eingangs des Lufteinlaßkanals weist,
- Verschieben der Schaufel (34) und der runden Scheibe (80) in radialer Richtung nach Innen, bis das Ende des inneren Drehzapfens (42) durch den Träger (58) hindurchgeht und in die Bohrung (60) des inneren Ringes (31) hineinsteht, wodurch die zweite Verankerung der Schaufel ausgeführt wird, und
- Verschrauben der Buchse (72), bis ihr radial inneres Ende (75) die Rundscheibe (80) berührt und die Schaufel (34) radial blockiert.

11. Montageverfahren nach einem der Ansprüche 7 bis 10,
dadurch **gekennzeichnet**,
daß es den Schritt des Vorsehens eines Gleitrings (85) zwischen dem äußeren Ende der Schaufel (34) und der runden Platte (80) vor dem Einsetzen des äußeren Drehzapfens (40) in die Bohrung (68) des äußeren Gehäuses (32) aufweist.
